(19) Europäisches Patentamt
European Patent Office
Office européen des brevets

(11) **EP 0 539 965 B1**

(12) **EUROPEAN PATENT SPECIFICATION**

(45) Date of publication and mention
of the grant of the patent:
**06.05.1999 Bulletin 1999/18**

(51) Int Cl.6: **G06F 17/28**, G06F 17/27

(21) Application number: **92118458.6**

(22) Date of filing: **28.10.1992**

(54) **An electronic dictionary including a pointer file and a word information correction file**

Elektronisches Wörterbuch mit einer Zeiger- und Wortkorrektionsdatei

Dictionnaire électronique comprenant un fichier de pointeurs et un fichier de correction des mots

(84) Designated Contracting States:
**DE FR GB**

(30) Priority: **30.10.1991 JP 285039/91**

(43) Date of publication of application:
**05.05.1993 Bulletin 1993/18**

(73) Proprietor: **SHARP KABUSHIKI KAISHA
Osaka-shi, Osaka-fu 545-0013 (JP)**

(72) Inventors:
• **Suzuki, Hitoshi
  Nara-shi, Nara-ken (JP)**
• **Fukumochi, Yoji
  Ikoma-gun, Nara-ken (JP)**
• **Kugimiya, Shuzo
  Nara-ken (JP)**
• **Sata, Ichiko
  Nara-shi, Nara-ken (JP)**
• **Hirai, Tokuyuki
  Nara-shi, Nara-ken (JP)**

• **Kutsumi, Takeshi
  Yamatokouriyama-shi, Nara-ken (JP)**

(74) Representative: **Müller, Frithjof E., Dipl.-Ing.
Patentanwälte
MÜLLER & HOFFMANN,
Innere Wiener Strasse 17
81667 München (DE)**

(56) References cited:
**EP-A- 0 369 829          EP-A- 0 448 038
WO-A-84/00426          FR-A- 2 408 878**

• **COMPUTER vol. 21, no. 6 , June 1988 , NEW
  YORK, US pages 11 - 22 XP000111853 J. GAIT
  'The Optical File Cabinet: A Random-Access File
  System for Write-Once Optical Disks'**
• **IBM TECHNICAL DISCLOSURE BULLETIN. vol.
  25, no. 2 , July 1982 , ARMONK US pages 501 -
  502 D. GLICKMAN ET AL 'Writeable Adaptive
  Transient Dictionary'**

## Description

## BACKGROUND OF THE INVENTION

### Field of the Invention

The present invention relates to an electronic dictionary, and more particularly to an electronic dictionary which may be used in a dictionary for translation in a mechanical translation system.

### Description of the Background Art

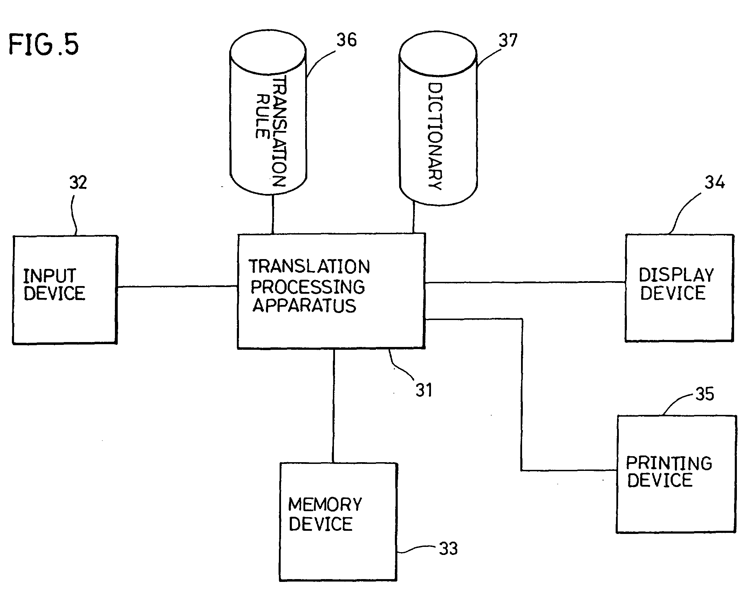

Fig. 5 is a block diagram showing a structure of a conventional electronic translator.

The structure thereof will be described hereinafter with reference to the drawings.

A translation processing apparatus 31 implemented with a CPU and the like is connected with an input device 32 for entering a sentence to be translated, a memory device 33 for storing a generated translated sentence with respect to an entered sentence, a display device 34 for displaying an entered sentence and a translated sentence, a printing device 35 for printing out a translation and the like, a translation rule file 36 for storing rules of syntax and the like required in producing a translated sentence, and an electronic dictionary file 37 storing a translated term corresponding to a word included in the entered sentence. Referring to the electronic dictionary file 37 for various words included in the sentence to be translated, various word information are derived to carry out a translation process.

An electronic dictionary incorporated in such a conventional mechanical translation system or a kana-kanji translator and the like could not have the contents corrected even if the user wanted his or her own dictionary because the contents thereof could not be rewritten.

A dictionary that allows correction is increased in cost because all the word information file must be implemented with an expensive rewritable memory device. Also, there is a problem of reliability because there is a possibility of the entire dictionary system being destroyed in case the rewritable memory device is defected. Furthermore, when a word information was erroneously corrected, it was difficult to restore it since information of the original dictionary is not maintained.

Furthermore, when correction of the dictionary was carried out by a plurality of people or per field, the word information dictionary had to be incorporated in a rewritable memory device of a large capacity for each person or each field to result in a significant increase in cost. Also, if all the word information file is not implemented in a rewritable memory device, the entire word information correction file had to be scanned to search a corrected word which is time consuming for retrieval, resulting in a problem in practicl usage if a great amount of correction was carried out.

Prior art document EP-A-0 369 829 disclosed an information searching apparatus, which comprises a memory device having a plurality of banks and containing a plurality of types of information data to be searched, as arranged in block, a table memory device containing, in table, the banks serving as the basis of the information to be searched, the number of changed banks and address data, and a table reading device for reading tabled information from the table memory device. This information searching apparatus is so arranged as to search the target information to be searched by obtaining the base bank information based on the tabled information from the table memory device, and by obtaining the number of changed banks and the address data of the base bank information. Further, this apparatus is arranged such that the user may learn synonyms and antonyms, or the translated terms, the phonetic symbols or the like of index words in dictionary data. Such data may be searched in a short period of time without any complicate operations, thereby to improve the learning efficiency.

## SUMMARY OF THE INVENTION

An object of the present invention is to improve the usability in an electronic dictionary.

Another object of the present invention is to improve the reliability in an electronic dictionary.

A further object of the present invention is to improve the economy in an electronic dictionary.

To solve these objects the present invention provides an electronic dictionary as specified in claim 1. Preferred embodiments of this dictionary are described in the subclaims.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is shows a structure of a file of an electronic dictionary according to a first embodiment of the present invention.

Fig. 2 shows a structure of a file of an electronic dictionary according to a second embodiment of the present invention.

Fig. 3 shows a structure of a file of an electronic dictionary according to a third embodiment of the present invention.

Fig. 4 shows a structure of an index file for describing a two stage index method according to a fourth embodiment of the present invention for increasing the speed of retrieving a heading file and the like of the first embodiment.

Fig. 5 is a block diagram showing a structure of a conventional electronic translator.

## DESCRIPTION OF THE PREFERRED EMBODIMENTS

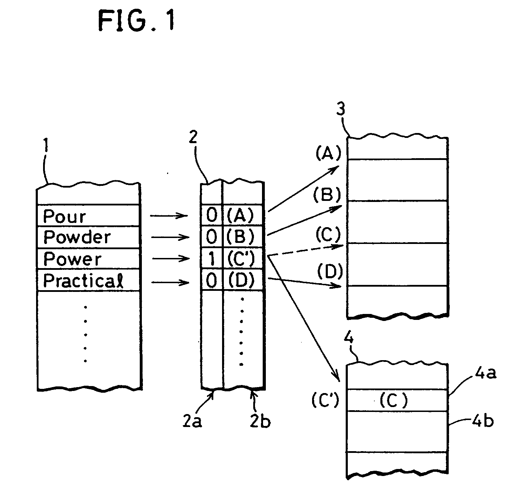

Fig. 1 shows the contents of an electronic dictionary file according to a first embodiment of the present invention, wherein a portion of the internal structure of the electronic dictionary 37 of Fig. 5 shown as a conventional example are indicated. The structure of the electronic translator itself is identical to the contents shown in the conventional example. Although the present embodiment has the heading of the electronic dictionary in English with part of speech of the heading, the changing pattern information, the meaning information, a translated word, the part of speech and inflection of a translated word, priority of the translated word and the like stored in the word information file which will be described later, the present invention can similarly be applied for terms in which the heading is in a language other than English.

A heading file 1 has an English heading in alphabetical order. In the drawing, English words of "pour" to "practical" are typically indicated. The method of storage may be in fixed length or variable length. In a pointer storage portion 2b of a pointer file 2, a pointer (an address value from the beginning of a word information file) of the word information file is stored corresponding to a heading in the order of the headings stored in the heading file. For example, pointer values of (A) and (B) are stored for the words of "pour" and "power", respectively, stored in the heading file, wherein each pointer value indicates the position where the word information corresponding to each word in the word information file is stored.

In the case the user wants to inspect the word "powder", the translation processing apparatus 31 searches the heading file from the beginning to store the order of the heading of "powder" into the memory device 33 when "powder" has been found. Assuming that the heading of "powder" is the 30000th heading from the beginning, the translation processing apparatus 31 then looks into the 30000th record in the pointer file 2. Because the pointer file 2 is a fixed length file including a correction flag storage portion 2a and a pointer storage portion 2b, the 30000th address position can be promptly obtained by calculation.

Upon finding a record in the pointer file 2 corresponding to the 30000th word of "powder", it is acknowledged that correction is not carried out because "0" is stored in the correction flag storage portion 2a. That is to say, if correction is carried out, "1" is entered in the correction flag storage portion 2a. If the correction flag is "0", the heading address of an area corresponding to a word information file 3 storing inherent word information is stored in the pointer storage portion 2b. The address value is (B) in the case of "powder". Therefore, the English part of speech, the changing pattern information, the meaning information, a translated term, the part of speech and inflection of the translated term, the priority of a translated term with respect to "powder" can be obtained from the word information file 3.

Similarly, "power" is the 30001th word with "1" in the correction flag storage portion 2a of the pointer file 2, indicating that the word information has been corrected. In this case, the pointer value (C') in the pointer storage portion 2b indicates the address pointer to the word information correction file 4.

A storage portion 4a for the original pointer exists at the head of the area beginning by the address value (C') of the word information correction file 4. In the storage portion 4a, an address value (C) of the word information file 3 prior to correction with respect to "power" is stored, which changes the correction flag storage portion 2a of the pointer file 2 to "0" in the case of cancelling the correction afterwards, facilitating the correction by rewriting the value in the pointer storage portion to (C). In the area of the correction information storage portion 4b succeeding the original pointer storage portion 4a, word information after correction with respect to "power" is stored.

Thus, word information not corrected can be derived from the word information file 3, and word information that is corrected can be derived from the word information correction file 4.

When the word information file 3 is to be corrected, a relevant word information is copied from the word information file by a general method, whereby the original pointer and the contents correcting that copy are added to the tail of the word information correction file 4. Then the correction flag storage portion 2a in the relevant pointer file 2 is modified to a corrected state of "1", whereby the head address value of the portion added to the word information correction file 4 is entered into the pointer storage portion 2b.

When word information that is already corrected is to be corrected again, the original pointer stored in the word information correction file 4 and the re-corrected contents are further added to the tail of the word information correction file 4, whereby the address value of the portion re-corrected and added is entered into the pointer storage portion 2b of the relevant pointer file 2. Regardless of how many times re-correction is repeated, the original pointer to the original word information file 3 is always stored in the original pointer storage portion of the last corrected and added portion. Therefore, in the case of cancelling a correction, the original pointer of the last corrected data in the word information correction file 4 indicated by the pointer stored in the pointer storage portion 2b of the pointer file 2 corresponding to the relevant heading is restored to the corresponding pointer storage portion of the pointer file 2, and the correction flag storage portion 2a is changed to the not-corrected state of "0", so that the original information of the word information file 3 can be used just by one cancel operation. If a repetitively corrected word of the same word is to be restored to each prior corrected state one by one, a flag storage portion indicating whether the pointer is towards the word information file 3 or towards the word information correction file 4 can be included in the original pointer portion of the word information correction file 4.

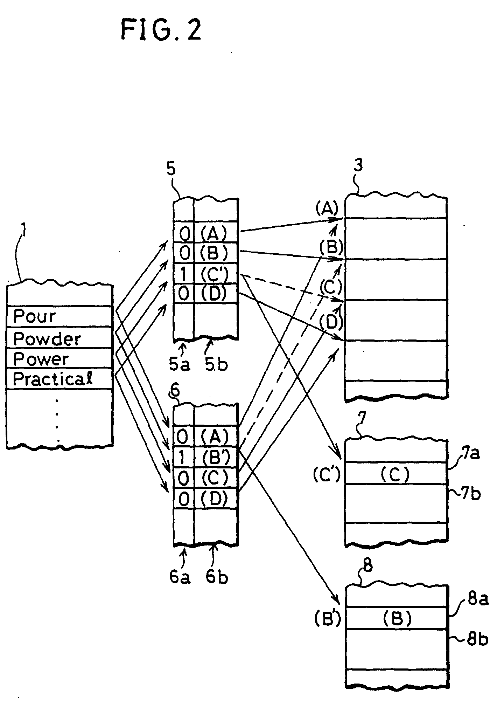

Fig. 2 is a diagram showing a structure of the contents of an electronic dictionary file for describing a second embodiment of the present invention, indicating that the word information can be corrected individually among a plurality of users by holding a plurality of pointer files and word information correction files.

Referring to Fig. 2, the pointer file 5 and the word information correction file 7 are files for a user A, the pointer file 6 and the word information correction file 8 are files for a user B, and the heading file 1 and the word information file 3 can be commonly shared by users A and B.

When used by the user A, the word information file 3 and the word information correction file 7 exclusively for the user A are referred to when the correction flag storage portion 5a is "0" and "1", respectively, from the heading file 1 via the pointer file 5.

When used by the user B, the word information file 3 or the word information correction file 8 exclusively for the user B is referred to from the heading file 1 via the pointer file 6. The correction and cancel operation of information is identical to the case of one user described in the embodiment of Fig. 1.

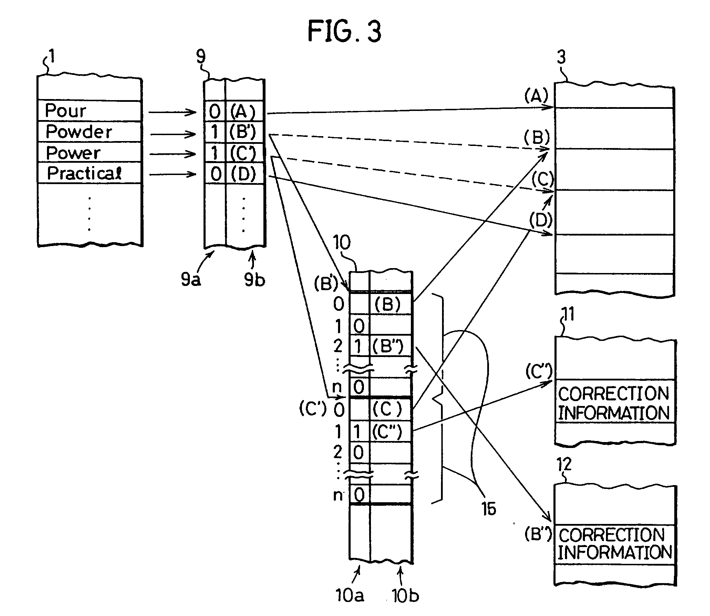

Fig. 3 shows the contents of an electronic dictionary file according to a third embodiment of the present invention. In comparison with the above-described second embodiment in which the capacity of the pointer file is increased if each user owns a pointer file in the case of many users, the present embodiment shows a method of saving the file capacity by providing a pointer administration file.

When retrieval of the heading file is specified, the translation processing system searches the heading file 1 according to the aforementioned method to identify the order of the heading. Accordingly, a relevant record in the pointer file 9 is referred to. This is identical to the case of a single user of the first embodiment shown in Fig. 1.

The correction flag storage portion 9a of the pointer file 9 stores whether the relevant word is corrected or not, by using a flag of "0" when there is no correction. In this case, a pointer value towards the word information file 3, for example a pointer value of (A) for "pour", is stored in the pointer portion 9b. If correction of a word is carried out, the correction storage portion 9a shows "1", whereby pointer values of (B') and (C') for "powder" and "power", respectively, towards the correction pointer administration file 10, are stored in the pointer storage portion 9b.

The correction pointer administration file 10 has a block of a correction pointer block 15 provided for one heading having the word information corrected, wherein each block includes "the number of users +1" records. For example, if there are ten users, eleven records will be needed. In the drawing, the contents of records (0 to n) are shown with n users. The head record (record 0) of the correction pointer block 15 serves to store a pointer value towards the original word information file 3, and records 1 to n are for user A, user B, ..., respectively,. Each record in the correction pointer block 15 includes a correction flag storage portion 10a and a pointer storage portion 10b. A correction flag of "0" indicates that the relevant user has not carried out correction of the word information with respect to the relevant heading, whereby the word information file 3 is referred to by the pointer value stored in the pointer storage portion of the head record (record 0). A correction flag of "1" indicates that the relevant user has carried out correction of the word information with respect to the relevant heading, whereby the word information correction file 11 or the word information correction file 12 corresponding to the relevant user is referred to by the pointer value stored in the pointer storage portion of the relevant record.

A case where the user A checks "powder" in the example of Fig. 3 will be described. In this case, the record 1 of the correction pointer block starting from the address (B') of the correction pointer administration file 10 is referred to via the pointer file 9. Because the correction flag is "0", the word information regarding "powder" stored in the word information file 3 can be obtained by the address pointer value (B) stored in the pointer storage portion of the head record (record 0) of that block.

A case is described where the user B attempts to check the same heading of "powder". In this case, the record 2 of the correction pointer block 15 beginning at the address (B') of the correction pointer administration file 10 via the pointer file 9 is referred to. Because the correction flag is "1", the corrected word information regarding "powder" stored in the word information correction file 12 for the user B can be obtained by the address pointer (B") stored in the pointer storage portion 10b of the same record.

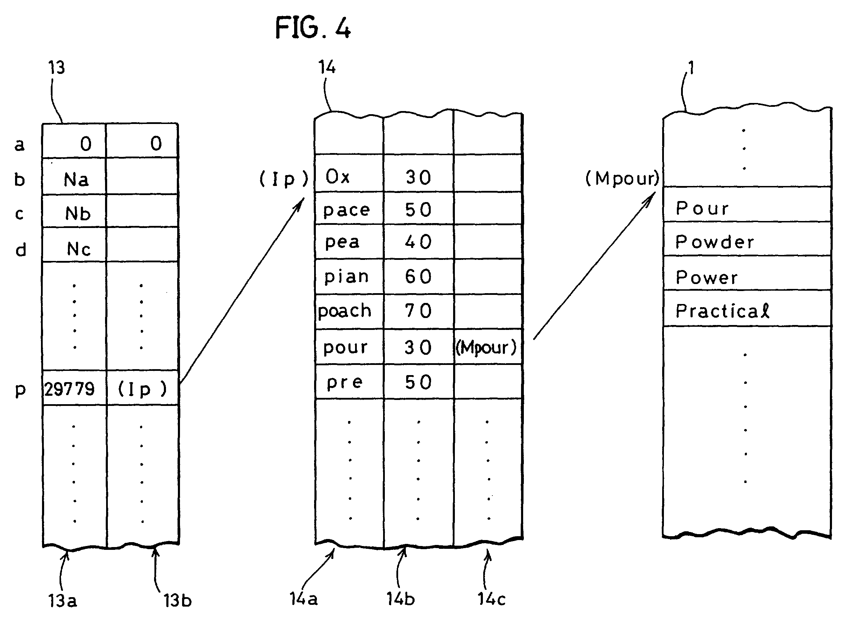

If the search from the beginning of the heading file 1 in the aforementioned first embodiment and the like is time consuming, a two-stage index can be used according to the fourth embodiment of the present invention shown in Fig. 4 to increase the speed of retrieval. In Fig. 4, a one character index file 13 includes a pointer storage portion 13b storing the head address of a secondary index beginning from a character for each character of alphabets a-z, and a total number storage portion 13a of total wording number of words of Na, Nb, Nc, each of which is included in each alphabet character. For example, in the record total number storage portion 13a corresponding to "p", for example, the total number of words starting from characters "a" to "o" is stored (29779), and the head address value (Ip) beginning from "p" in the secondary index 14 is stored in the pointer storage portion 13b.

In the secondary index file 14, several characters of the beginning word of each block which is sectioned by every tens of headings of the heading file 1 is stored in an index storage portion 14a, the number of words stored in each block is stored in the number portion 14b, and the head address of the block of the heading file corresponding to each index is stored in the pointer storage portion 14c.

For example, in searching "powder", a record corresponding to the head alphabet "p" is found from the one character index file 13. Because a fixed length memory is used for the one character index file, the address of the record corresponding to "p" can be obtained by calculation by making the alphabet character correspond to the ASCII code.

Calculating the corresponding record, a total number of 29779, and a pointer value of (lp) can be obtained. By this pointer value, the head record (the index of "pace") beginning by "p" in the secondary index 14 can be directly found. By carrying out a search in ascending order from this point in this index storage portion 14a to arrive at "pre", it can be identified that "powder" is included in the index block of "pour". At this time, the number in each number portion from "pace" to "poach" is sequentially added to the aforementioned 29779. That is to say by the following equation of:

$$29779 + 50 + 40 + 60 + 70 = 29999$$

the value of 29999 is obtained.

The address value (Mpour) of the heading file 1 of the word beginning from "pour" can be derived from the pointer storage portion 14c of the secondary index file. The "pour" in the heading file 1 can be directly found by this address value. By continuing the search in ascending order in the heading file 1, "powder" can be found, where the scanned number of heading of 1 from "pour" up to "powder" is added to the aforementioned 29999. The "powder" can be identified as the 30000th heading from the beginning of the heading file.

By using such a two-stage index of the fourth embodiment, the retrieval of the heading file 1, and detection of the order of the word from the beginning of the heading file 1 can be carried out at high speed. A method of using such a two-stage index is well known.

It is also well known to establish a differential structure with the prior word in the heading file to save the capacity of the heading index.

Although the present invention may be applied to a translation dictionary for a mechanical translation system in the above described embodiments, the present invention is not limited to this and may be applied to a kana-kanji conversion dictionary and to an electronic dictionary of electronic translators.

As described in the above embodiments, by implementing only the pointer file and the word information correction file with a rewritable memory device of the files forming a dictionary system, it is possible to use an economical memory device exclusively for reading for heading files and word information files requiring a large capacity, whereby the user can implement a correctable dictionary system without requiring a rewritable memory device of a great capacity.

Because the heading file and the word information file are not rewritten by the user, there is no possibility of the entire dictionary system being destroyed even if a user carries out an abnormal correction. Even if a user carries out an erroneous correction, the correction can be cancelled to restore the contents back to the original dictionary.

As described in the fourth embodiment, the retrieval of the heading word can be carried out at a high speed regardless of whether the word information is corrected or not.

By increasing a relatively small amount of file such as the pointer file and the word information correction file or the correction pointer administration file, a plurality of users can carry out correction individually for each user.

When the word information for the same heading is carried out many times, the correction can be cancelled just by one operation to be restored to the original information, or to be restored to a prior corrected information one by one.

In the case of obtaining a backup of the corrected information, a backup of the entire dictionary system is not necessary, and only the backup of the file implementing the rewritable memory device, i.e. only the pointer file, the word information correction file, and the correction pointer administration file are required.

Although the present invention has been described and illustrated in detail, it is clearly understood that the same is by way of illustration and example only and is not to be taken by way of limitation, the scope of the present invention being limited only by the terms of the appended claims.

**Claims**

**1.** An electronic dictionary comprising:

storage means (1) for storing at least one word arranged in an alphabetic order relative to other words, in said storage means (1),
first word information storage means (3) for storing word information corresponding to said word,
second word information storage means (4) for storing corrected word information which is corrected with respect to said stored word information,
indicating means (2a) for indicating whether the word information is corrected or not with respect to said stored word, and
pointer means (2b) responsive to an output of said indicating means (2a) for selecting one of said first and second word information storage means (3, 4) dependent upon a fact that the word information has been corrected or not.

2. The electronic dictionary according to claim 1, wherein:

there are a plurality of said indicating means (5a, 6a) and a plurality of said second word information storage means (7, 8), the number of said indicating means (5a, 6a) being equal to the number of said second word information storage means (7, 8), and, said pointer means (5b, 6b) responds to an output indicating that word information is corrected in any of said indicating means (5a, 6a) for selecting one of said second word information storage means (7, 8) corresponding to a specific indicating means.

3. The electronic dictionary according to claim 1, wherein

said indicating means includes a correction flag storage portion (2a) corresponding to said word, a flag indicating whether the word information is correct or not, and said pointer means includes a pointer storage portion (2b) for storing a pointer indicating the address value of a corresponding word information stored in either of said first word information storage means (3) or said second word information storage means (4) to be selected dependent on the contents of said flag, said correction flag storage portion (2a) and said pointer storage portion (2b) forming a pointer file.

4. The electronic dictionary according to claim 3, wherein an address value of said second word information storage means (4) is stored in a corresponding pointer storage portion (2b) when said flag indicates that the word information is corrected, and wherein the address value of said first word information storage means (3) is stored in a corresponding pointer storage portion when said flag indicates that the word information is not corrected.

5. The electronic dictionary according to claim 1, wherein said storage means (1) and said first word information storage means (3) are implemented with a memory device exclusively for reading, and said second word information storage means (4) and said indicating means (2a) are implemented with a rewritable memory device.

6. The electronic dictionary according to claim 1, wherein:

said storage means (1) stores a plurality of words arranged in alphabetic order, a plurality of said second word information storage means (4), each store corrected word information with respect to said stored word information, and said indicating means (2a) indicates whether the word information is corrected or not corresponding to each of said second word information storage means (4) for each of said stored words.

7. The electronic dictionary according to claim 6, wherein said indicating means and said pointer means comprise a pointer file (9) and a correction pointer administration file (10) formed of a plurality of blocks equivalent in number to the number of said words and wherein said pointer file (9) comprises a first correction flag storage portion (9a) provided dependent on said words for storing a flag indicating whether or not the word information is corrected or not, and a pointer storage portion (9b) for storing an address value of said first word information storage means (3) to be selected dependent on the contents of said flag or block information specifying a certain block of said correction pointer administration file (10).

8. The electronic dictionary according to claim 7, wherein each of the blocks of said correction pointer administration file (10) has records equivalent in number to the number of said second word information storage means (4), wherein each of said records stored a flag indicating whether the respective word information is corrected or not, and a pointer indicating the address value of a respective word information stored in either of said first word information storage means (3) or said second word information storage means (4) to be selected dependent on the contents of the flag.

9. The electronic dictionary according to claim 8, wherein each of said second word information storage means (4) and each of said correction pointer administration file records correspond to each of a plurality of users.

10. The electronic dictionary according to claim 9, wherein each of said blocks further include an additional record, in which the address value of said first word information storage means (3) stored in a corresponding word information is stored.

**Patentansprüche**

1. Elektronisches Wörterbuch, umfassend:

   eine Speichereinrichtung (1) zum Speichern wenigstens eines Wortes, das in alphabethischer Reihenfolge bezüglich anderer Wörtern angeordnet ist, in der Speichereinrichtung (1), eine erste Wortinformationsspeichereinrichtung (3) zum Speichern von Wortinformation entsprechend dem Wort, eine zweite Wortinformationsspeichereinrichtung (4) zum Speichern einer korrigierten Wortinformation, die bezüglich der gespeicherten Wortinformation korrigiert ist, eine Angabeeinrichtung (2a) zum Angeben, ob die Wortinformation bezüglich des gespeicherten Wortes korrigiert ist oder nicht, und eine Zeigereinrichtung (2b), die auf ein Ausgangssignal von der Angabeeinrichtung (2a) anspricht, um eine Speichereinrichtung aus der ersten und der zweiten Wortinformationsspeichereinrichtung (3, 4) abhängig von einer Tatsache zu wählen, daß die Wortinformation korrigiert wurde oder nicht.

2. Elektonisches Wörterbuch nach Anspruch 1, bei dem:

   eine Vielzahl der Angabeeinrichtungen (5a, 6a) und eine Vielzahl der zweiten Wortinformationsspeichereinrichtungen (7, 8) vorgesehen sind, wobei die Anzahl der Angabeeinrichtungen (5a, 6a) gleich zu der Anzahl der zweiten Wortinformationsspeichereinrichtungen (7, 8) ist, und die Zeigereinrichtungen (5b, 6b) auf ein Ausgangssignal ansprechen, das anzeigt, daß Wortinformation in einer der Angabeeinrichtungen (5a, 6a) korrigiert ist, um eine der zweiten Wortinformationsspeichereinrichtungen (7, 8) entsprechend einer spezifischen Angabeeinrichtung zu wählen.

3. Elektronisches Wörterbuch nach Anspruch 1, bei dem:

   die Angabeeinrichtung einen Korrektionsflagge-Speicherteil (2a) entsprechend dem Wort umfaßt, wobei eine Flagge anzeigt, ob die Wortinformation richtig ist oder nicht, und die Zeigereinrichtung einen Zeigerspeicherteil (2b) umfaßt, um einen Zeiger zu speichern, der den Adresswert einer entsprechenden Wortinformation anzeigt, die in der ersten Wortinformationsspeichereinrichtung (3) oder in der zweiten Wortinformationsspeichereinrichtung (4) gespeichert ist, welche abhängig von dem Inhalt der Flagge zu wählen sind, wobei der Korrektionsflagge-Speicherteil (2a) und der Zeigerspeicherteil (2b) eine Zeigerdatei bilden.

4. Elektronisches Wörterbuch nach Anspruch 3, bei dem ein Adresswert der zweiten Wortinformationsspeichereinrichtung (4) in einem entsprechenden Zeigerspeicherteil (2b) gespeichert wird, wenn die Flagge anzeigt, daß die Wortinformation korrigiert ist, und bei dem der Adresswert der ersten Wortinformationsspeichereinrichtung (3) in einem entsprechenden Zeigerspeicherteil gespeichert wird, wenn die Flagge anzeigt, daß die Wortinformation nicht korrigiert ist.

5. Elektronisches Wörterbuch nach Anspruch 1, bei dem die Speichereinrichtung (1) und die erste Wortinformationsspeichereinrichtung (3) mit einer Speichervorrichtung ausschließlich zum Lesen ausgeführt sind, und bei dem die zweite Wortinformationsspeichereinrichtung (4) und die Angabeeinrichtung (2a) mit einer umschreibbaren Speichervorrichtung ausgeführt sind.

6. Elektronisches Wörterbuch nach Anspruch 1, bei dem:

   die Speichereinrichtung (1) eine Vielzahl von in alphabetischer Reihenfolge angeordneten Wörtern speichert, eine Vielzahl der zweiten Wortinformationsspeichereinrichtungen (4) vorgesehen ist, deren jede korrigierte Wortinformation bezüglich der gespeicherten Wortinformation speichert, und die Angabe einrichtung (2a) angibt, ob die Wortinformation korrigiert ist oder nicht, ensprechend jeder zweiten Wortinformationsspeichereinrichtung (4) für jedes der gespeicherten Wörter.

7. Elektronisches Wörterbuch nach Anspruch 6, bei dem die Angabeeinrichtung und die Zeigereinrichtung eine Zeigerdatei (9) und eine Korrektionszeiger-Verwaltungsdatei (10), gebildet aus einer Vielzahl von Blöcken, die in der Anzahl äquivalent zu der Anzahl der Wörter sind, umfaßt, und bei dem die Zeigerdatei (9a) einen ersten Korrektionsflagge-Speicherteil (9a), der abhängig von den Wörtern vorgesehen ist, um eine Flagge zu speichern, die anzeigt, ob die Wortinformation korrigiert ist oder nicht, und einen Zeigerspeicherteil (9b) zum Speichern eines Adresswertes der ersten Wortinformationsspeichereinrichtung (3), die abhängig von den Inhalten der Flagge oder einer Blockinformation, die einen bestimmten Block der Korrektionszeiger-Verwaltungsdatei (10) spezifiziert, zu wählen ist, umfaßt.

**8.** Elektronisches Wörterbuch nach Anspruch 7, bei dem jeder der Blöcke der Korrektionszeiger-Verwaltungsdatei (10) Aufzeichnungen hat, die in der Anzahl gleich zu der Anzahl der zweiten Wortinformationsspeichereinrichtungen (4) sind, wobei jede der Aufzeichnungen eine Flagge, die angibt, ob die jeweilige Wortinformation korrigiert ist oder nicht, und einen Zeiger, der den Adresswert der jeweiligen Wortinformation angibt, die in der ersten Wortinformationsspeichereinrichtung (3) oder der zweiten Wortinformationsspeichereinrichtung (4) gespeichert ist, die abhängig von den Inhalten der Flagge zu wählen sind, speichert.

**9.** Elektronisches Wörterbuch nach Anspruch 8, bei dem jede der zweiten Wortinformationsspeichereinrichtungen (4) und jede der Korrektionszeiger-Verwaltungsdateiaufzeichnungen jedem einer Vielzahl von Benutzern entspricht.

**10.** Elektronisches Wörterbuch nach Anspruch 9, bei dem jeder der Blöcke außerdem eine zusätzliche Aufzeichnung aufweist, in welcher der Adresswert der ersten Wortinformationsspeichereinrichtung (3), der in einer entsprechenden Wortinformation gespeichert ist, gespeichert ist.

**Revendications**

**1.** Dictionnaire électronique, comprenant:

un moyen de stockage (1) pour stocker au moins un mot, disposé dans un ordre alphabétique par rapport à d'autres mots, dans ledit moyen de stockage (1),
un premier moyen de stockage d'informations de mot (3) pour stocker des informations de mot correspondant audit mot,
un second moyen de stockage d'informations de mot (4) pour stocker des informations de mot corrigées, qui sont corrigées par rapport auxdites informations de mot stockées,
un moyen indicateur (2a) pour indiquer si les informations de mot sont, ou non, corrigées relativement audit mot stocké, et
un moyen pointeur (2b) réagissant à une sortie dudit moyen indicateur (2a) pour sélectionner l'un desdits premier et second moyens de stockage d'informations de mot (3, 4) en fonction du fait que les informations de mot ont été, ou non, corrigées.

**2.** Dictionnaire électronique selon la revendication 1, dans lequel:

il existe une multiplicité desdits moyens indicateurs (5a, 6a) et une multiplicité desdits seconds moyens de stockage d'informations (7, 8), le nombre desdits moyens indicateurs (5a, 6a) étant égal au nombre desdits seconds moyens de stockage d'informations de mot (7, 8), et
ledit moyen pointeur (5b, 6b) réagit à une sortie indiquant que les informations de mot sont corrigées dans l'un quelconque desdits moyens indicateurs (5a, 6a) en sélectionnant l'un desdits seconds moyens de stockage d'informations de mot (7, 8) correspondant à un moyen indicateur particulier.

**3.** Dictionnaire électronique selon la revendication 1, dans lequel:

ledit moyen indicateur comprend une partie de stockage de drapeau de correction (2a) correspondant audit mot, un drapeau indiquant si les informations de mot sont, ou non, correctes, et ledit moyen pointeur comprend une partie de stockage de pointeur (2b) servant à stocker un pointeur indiquant la valeur d'adresse d'informations de mot correspondantes stockées soit dans ledit premier moyen de stockage d'informations de mot (3), soit dans ledit second moyen de stockage d'informations de mot (4), destinée à être sélectionnée en fonction du contenu dudit drapeau, ladite partie de stockage de drapeau de correction (2a) et ladite partie de stockage de pointeur (2b) formant un fichier de pointeur.

**4.** Dictionnaire électronique selon la revendication 3, dans lequel la valeur d'adresse dudit second moyen de stockage d'informations de mot (4) est stockée dans une partie de stockage de pointeur correspondante (2b) lorsque ledit drapeau indique que les informations de mot sont corrigées, et dans lequel la valeur d'adresse dudit premier moyen de stockage d'informations de mot (3) est stockée dans une partie de stockage de pointeur correspondante lorsque ledit drapeau indique que les informations de mot ne sont pas corrigées.

**5.** Dictionnaire électronique selon la revendication 1, dans lequel ledit moyen de stockage (1) et ledit premier moyen de stockage d'informations de mot (3) sont mis en oeuvre à l'aide d'un dispositif de mémoire servant exclusivement à la lecture, et ledit second moyen de stockage d'informations de mot (4) et ledit moyen indicateur (2a) sont mis en oeuvre à l'aide d'un dispositif de mémoire réinscriptible.

**6.** Dictionnaire électronique selon la revendication 1, dans lequel:

ledit moyen de stockage (1) stocke une multiplicité de mots disposés en ordre alphabétique, des moyens de stockage d'une multiplicité de dits seconds moyens de stockage d'informations de mot (4) stockent chacun des informations de mot corrigées par rapport auxdites informations de mot stockées, et

ledit moyen indicateur (2a) indique si les informations de mot sont, ou non, corrigées, relativement à chacun desdits seconds moyens de stockage d'informations de mot (4) pour chacun desdits mots stockés.

7. Dictionnaire électronique selon la revendication 6, dans lequel ledit moyen indicateur et ledit moyen pointeur comprennent un fichier de pointeur (9) et un fichier de gestion de pointeur de correction (10) se compose d'une multiplicité de blocs équivalents, en nombre, au nombre desdits mots, et dans lequel ledit fichier de pointeur (9) comprend une première partie de stockage de drapeau de correction (9a) prévue en fonction desdits mots pour stocker un drapeau indiquant si, oui ou non, les informations de mot sont corrigées, et une partie de stockage de pointeur (9b) servant à stocker une valeur d'adresse dudit premier moyen de stockage d'informations de mot (3) devant être sélectionnée en fonction du contenu dudit drapeau ou des informations de bloc spécifiant un certain bloc dudit fichier de gestion de pointeur de correction (10).

8. Dictionnaire électronique selon la revendication 7, dans lequel chacun des blocs dudit fichier de gestion de pointeur de correction (10) comporte des articles équivalents, en nombre, au nombre des dits seconds moyens de stockage d'informations de mot (4), dans lequel chacun desdits articles stocke un drapeau indiquant si, oui non, les informations de mot respectives sont corrigées, et un pointeur indiquant la valeur d'adresse d'informations de mot respectives stockées soit dans ledit premier moyen de stockage d'information de mot (3) soit dans ledit second moyen de stockage d'informations de mot (4), qui est destinée à être sélectionnée en fonction du contenu du drapeau.

9. Dictionnaire électronique selon la revendication 8, dans lequel chacun desdits seconds moyens de stockage d'informations de mot (4) et chacun desdits articles de fichier de gestion de pointeur de correction correspondent à chaque utilisateur d'une multiplicité d'utilisateurs.

10. Dictionnaire électronique selon la revendication 9, dans lequel chacun desdits blocs comprend, en outre, un article supplémentaire, dans lequel est stockée la valeur d'adresse dudit premier moyen de stockage d'informations de mots (3) stockée dans des informations de mot correspondantes.

# FIG.1

EP 0 539 965 B1

## FIG. 2

# FIG. 3

EP 0 539 965 B1

# FIG. 4

| | 13 | |
|---|---|---|
| a | 0 | 0 |
| b | Na | |
| c | Nb | |
| d | Nc | |
| | ⋮ | ⋮ |
| p | 29779 | (Ip) |
| | ⋮ | ⋮ |

13a  13b

(Ip)

| 14 | | |
|---|---|---|
| Ox | 30 | |
| pace | 50 | |
| pea | 40 | |
| pian | 60 | |
| poach | 70 | |
| pour | 30 | (Mpour) |
| pre | 50 | |
| ⋮ | ⋮ | ⋮ |

14a  14b  14c

(Mpour)

| 1 |
|---|
| ⋮ |
| Pour |
| Powder |
| Power |
| Practical |
| ⋮ |

EP 0 539 965 B1

FIG.5

TRANSLATION RULE 36

DICTIONARY 37

INPUT DEVICE 32

TRANSLATION PROCESSING APPARATUS 31

DISPLAY DEVICE 34

MEMORY DEVICE 33

PRINTING DEVICE 35

EP 0 539 965 B1